# EUROPEAN PATENT SPECIFICATION

(11) **EP 3 105 676 B1**
(45) Date of publication and mention of the grant of the patent: **19.10.2022**
(21) Application number: 14882535.9
(22) Date of filing: 12.02.2014
(51) Int. Cl.: G06F 8/654

(54) **METHOD AND APPARATUS FOR UPDATING A FIRMWARE OF AN APPARATUS**
VERFAHREN UND VORRICHTUNG ZUR AKTUALISIERUNG EINER FIRMWARE EINER VORRICHTUNG
PROCÉDÉ ET APPAREIL POUR METTRE À JOUR UN MICROLOGICIEL D'UN APPAREIL

(43) Date of publication of application: 21.12.2016
(73) Proprietor: Nokia Technologies Oy, 02610 Espoo (FI)
(72) Inventor: CHERIAN, Vijo, San Jose, California 95111 (US); KRISHNAN, Praveen, Sunnyvale, California 94085 (US)
(74) Representative: Whiting, Gary
(86) International application number: PCT/US2014/016119
(87) International publication number: WO 2015/122890

(56) References cited:
- US-A1- 2009 075 641
- US-A1- 2012 310 470
- US-A1- 2013 005 470

## Description

### TECHNICAL FIELD

The present application relates generally to updating a firmware of an apparatus.

### BACKGROUND

As electronic apparatuses become increasingly prevalent and pervasive in our society, the design of many electronic apparatus has trended towards a minimalistic design. For example, electronic apparatuses may lack a robust display, may lack physical buttons, and/or the like. In such an example, it may be desirable to allow for easy and intuitive interaction with the electronic apparatus notwithstanding the lack of a robust display, the lack of physical buttons, and/or the like. As such, it may be desirable to configure an electronic apparatus such that a user may interact with the electronic apparatus in an easy and intuitive manner.

US 2012/0310470 discloses a wheelchair system comprising a processor, a memory storing operational programs and data, a short range wireless interface for communication with a remote service via an intermediary device (e.g. smart phone, personal computer) and several user interface options for input and output. Input options include manual interfaces. Output options include a small display, LEDs etc. The wireless interface allows download of new firmware and firmware upgrades and of operational parameters to the wheelchair system, and uploading diagnostic data to the remote server.

### SUMMARY

The invention is defined in the appended claims.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURES 2A-2B are block diagrams showing apparatus communication according to at least one example embodiment;
FIGURE 3 is a diagram showing an apparatus according to at least one example embodiment;
FIGURES 4A-4J are diagrams illustrating a predetermined motion according to at least one example embodiment;
FIGURE 5 is a flow diagram illustrating activities associated with updating a firmware of an apparatus according to at least one example embodiment;
FIGURE 6 is a flow diagram illustrating activities associated with determining whether there is an updated version of a firmware available for download according to at least one example embodiment;
FIGURE 7 is a flow diagram illustrating activities associated with performing a factory reset according to at least one example embodiment;
FIGURE 8 is a flow diagram illustrating activities associated with causing update of a firmware of a peripheral apparatus according to at least one example embodiment;
FIGURE 9 is a flow diagram illustrating activities associated with determining whether there is an updated version of a firmware available for download according to at least one example embodiment; and
FIGURE 10 is a flow diagram illustrating activities associated with causing performance of a factory reset by a peripheral apparatus according to at least one example embodiment.

### DETAILED DESCRIPTION OF THE DRAWINGS

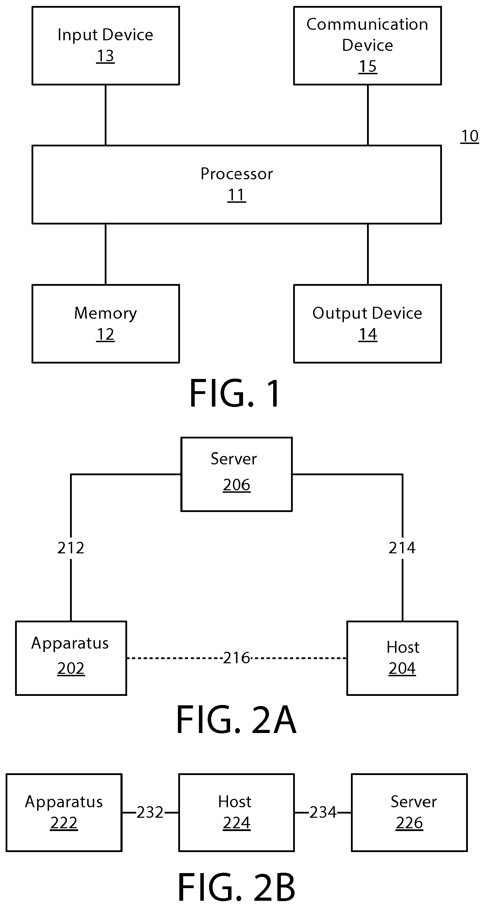

An embodiment of the invention and its potential advantages are understood by referring to FIGURES 1 through 10 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of the invention as defined in the appended claims.

Additionally, as used herein, the term 'circuitry' refers to (a) hardwareonly circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention as defined in the claims. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile
computer, a desktop computer, a television, a gaming apparatus, a laptop computer, a tablet computer, a media player, a camera, a video recorder, a mobile phone, a global positioning system (GPS) apparatus, an automobile, a kiosk, an electronic table, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus that comprises a display, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display twodimensional information, three-dimensional information and/or the like.

In embodiments including a keypad, the keypad may comprise numeric (for example, 0-9) keys, symbol keys (for example, #, ^{∗}), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

FIGURES 2A-2B are diagrams illustrating apparatus communication according to at least one example embodiment. The examples of FIGURES 2A-2B are merely examples and do not limit the scope of the claims. For example, communication paths may vary, apparatus count may vary, host count may vary, server count may vary, apparatus, host, and/or server designations may vary, apparatus, host, and/or server configuration may vary, and/or the like.

FIGURE 2A is a diagram illustrating apparatus communication according to at least one example embodiment. The example of FIGURE 2A depicts apparatus 202 in communication with server 206 by way of communication channel 212 and host 204 in communication with server 206 by way of communication channel 214. In the example of FIGURE 2A, host 204 is a host apparatus. A host apparatus may be an apparatus that is configured to manage one or more operations associated with one or more peripheral apparatuses, separate apparatus, and/or the like. For example, host 204 may receive information communicated from apparatus 202, and may forward at least a portion of the information to server 206. In the example of FIGURE 2A, server 206 is a server apparatus. A server apparatus may be a server, a computer, a repository, a service platform, a database, and/or the like.

It should be understood that, even though FIGURE 2A depicts communication channel 216 between apparatus 202 and host 204, apparatus 202 and host 204 may communicate indirectly via one or more separate apparatuses. For example, apparatus 202 may indirectly communicate with host 204 via server 206 by way of communication channels 212 and 214, and host 204 may indirectly communicate with apparatus 202 via server 206 by way of communication channels 214 and 212. For example, apparatus 202 may cause sending of information to host 204 by way of communication channel 216, apparatus 202 may receive information from host 204 by way of server 206, server 206 may receive information sent from apparatus 202, and/or the like.

It should be understood that, even though FIGURE 2A illustrates a direct communication channel between apparatus 202 and server 206, and between host 204 and server 206, there may be intermediate apparatuses that facilitate communication between apparatus 202 and server 206, and/or between host 204 and server 206. For example, there may be one or more routers, hubs, switches, gateways, and/or the like, that are utilized in the communication channels between apparatus 202 and server 206, and/or between host 204 and server 206. In addition, there may be other separate apparatuses that apparatus 202, host 204, and/or server 206 are in communication with. For example, apparatus 202, host 204, and/or server 206 may be in communication with a different server, another separate apparatus, and/or the like.

FIGURE 2B is a diagram illustrating apparatus communication according to at least one example embodiment. The example of FIGURE 2B depicts apparatus 222 in communication with host 224 by way of communication channel 232 and host 224 in communication with server 226 by way of communication channel 234. In the example of FIGURE 2B, apparatus 222 may indirectly communicate with server 226 via host 224 by way of communication channels 232 and 234, and server 226 may indirectly communicate with apparatus 222 via host 224 by way of communication channels 234 and 232. For example, apparatus 222 may cause sending of information to host 224 by way of communication channel 232, and host 224 may forward the information from apparatus 222 to server 226. Similarly, apparatus 222 may receive information from server 226 by way of host 224. In such an example, host 224 may receive information from server 226, and forward the information from server 226 to apparatus 222.

It should be understood that, even though FIGURE 2B illustrates a direct communication channel between apparatus 222 and host 224, and between host 224 and server 226, there may be intermediate apparatuses that facilitate communication between apparatus 222 and host 224, and/or between host 224 and server 226. For example, there may be one or more routers, hubs, switches, gateways, and/or the like, that are utilized in the communication channels between apparatus 222 and host 224, and/or between host 224 and server 226. In addition, there may be other separate apparatuses that apparatus 222, host 224, and/or server 226 are in communication with. For example, apparatus 222, host 224, and/or server 226 may be in communication with another apparatus, a different host, another server, and/or the like.

In some circumstances, a user may desire to have collaboration between apparatuses, such as between an apparatus and a separate apparatus, based on their proximity with each other. For example, it may be intuitive for a user to manage collaboration between apparatuses that are local to each other. A plurality of apparatuses may be proximate to each other based on location, availability of local communication among the apparatuses, and/or the like. For example, if the apparatuses collaborate by way of low power radio frequency communication, a radio frequency communication, near field communication, inductive communication, electric field communication, Bluetooth communication, infrared communication, local area network communication, wireless local area network communication, and/or the like, the apparatuses may be considered to be proximate with each other based, at least in part, on availability of such proximity-based communication with each other. In at least one example embodiment, apparatuses include electronic apparatuses, peripheral apparatuses, host apparatus, and/or the like. In at least one example embodiment, apparatuses communicate with each other. For example, an apparatus may be an apparatus that automatically communicates with another apparatus for purposes such as identifying the apparatus, synchronizing data, exchanging status information, and/or the like. In at least one example embodiment, an apparatus retains information associated with communication with a separate apparatus. For example the apparatus may comprise information associated with identifying, communicating with, authenticating, performing authentication with, and/or the like, the separate apparatus. In this manner, the apparatus may be privileged to perform operations in conjunction with the separate apparatus that a different apparatus may lack the privilege to perform.

In at least one example embodiment, communication based, at least in part, on short range communication is referred to as proximity-based communication. In at least one example embodiment, proximity-based communication relates to wireless communication that is associated with a short range, such as low power radio frequency communication, radio frequency communication, near field communication, inductive communication, electric field communication, Bluetooth communication, infrared communication, local area network communication, wireless local area network communication, and/or the like. In such an example, the exchange of information may be by way of the short range wireless communication between the apparatus and a separate apparatus, host apparatus, and/or the like.

In at least one example embodiment, a proximity-based communication channel is a low power radio frequency communication channel, a radio frequency communication channel, a near field communication channel, a wireless communication channel, a wireless local area network communication channel, a Bluetooth communication channel, an electric field communication channel, an inductive communication channel, an infrared communication channel, and/or the like. For example, as depicted in FIGURE 2A, apparatus 202 communicates with host 204 by way of a communication channel 216. In the example of FIGURE 2A, communication channel 216 may be a low power radio frequency communication channel, a radio frequency communication channel, a near field communication channel, a wireless communication channel, a wireless local area network communication channel, a bluetooth communication channel, an electric field communication channel, an inductive communication channel, an infrared communication channel, and/or the like. Similarly, as depicted in FIGURE 2B, apparatus 222 communicates with host 224 by way of communication channel 232. In the example of FIGURE 2B, communication channel 232 may be a low power radio frequency communication channel, a radio frequency communication channel, a near field communication channel, a wireless communication channel, a wireless local area network communication channel, a Bluetooth communication channel, an electric field communication channel, an inductive communication channel, an infrared communication channel, and/or the like.

In at least one example embodiment, an apparatus and a separate apparatus communicate by way of non-proximity-based communication channels. For example, as depicted in FIGURE 2A, apparatus 202 communicates with server 206 by way of a communication channel 212. In the example of FIGURE 2A, communication channel 212 may be a local area network communication channel, a wide area network communication channel, an internet communication channel, a cellular communication channel, and/or the like. Similarly, as depicted in FIGURE 2B, host 224 communicates with server 226 by way of communication channel 234. In the example of FIGURE 2B, communication channel 234 may be a local area network communication channel, a wide area network communication channel, an internet communication channel, a cellular communication channel, and/or the like.

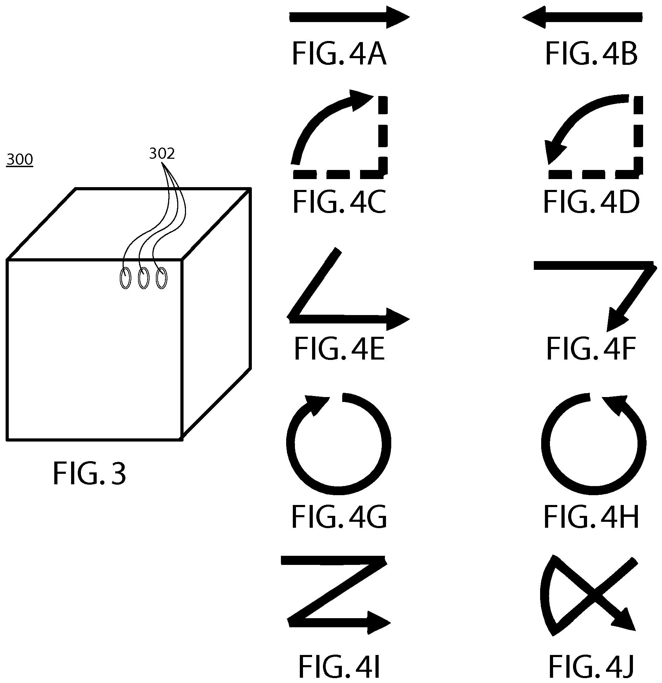

FIGURE 3 is a diagram showing an apparatus according to at least one example embodiment. The example of FIGURE 3 is merely an example and does not limit the scope of the claims. For example, apparatus shape may vary, apparatus design may vary, apparatus configuration may vary, apparatus orientation may vary, non-alphanumeric light emitting diode configuration count may vary, non-alphanumeric light emitting diode configuration may vary, and/or the like.

As electronic apparatuses have become increasingly prevalent and increasingly pervasive in our society, many users of electronic apparatuses have become accustomed to integrating their electronic apparatuses into various aspects of their lives. Additionally, in recent times, electronic apparatuses have become increasingly affordable. As such, it may be desirable to configure an electronic apparatus such that the electronic apparatus may provide a user of the electronic apparatus with various information that may be relevant to the user, useful to the user, assist the user in some way, and/or the like. In at least one example embodiment, an apparatus is a sensor apparatus. In at least one example embodiment, a sensor apparatus comprises one or more sensors. For example, the sensor apparatus may comprise a temperature sensor, a motion sensor, a location sensor, a humidity sensor, an altitude sensor, a light sensor, a sound sensor, and/or the like. The sensor apparatus may have a minute form factor such that the sensor apparatus is easily portable, storable, attachable, and/or the like. For example, the form factor of the sensor apparatus may be a one centimeter cube, may be a two centimeter by two centimeter by one-half of one centimeter rectangular prism, may be a cylindrical prism, and/or the like. In such an example, due to the minute form factor of the apparatus, there may be insufficient surface area to provide for a robust user interface. As such, it may be desirable to allow a user to interact with the apparatus in a manner that avoids interactions with physical interface elements, such as switches, buttons, and/or the like.

In many circumstances, an electronic apparatus may be powered by way of one or more batteries. In such circumstances, powering the electronic apparatus by way of a battery may be desirable for reasons relating to portability, dimensional constraints, and/or the like. An electronic apparatus may be powered by way of a coin cell battery, a lithium ion battery, a rechargeable battery, and/or the like. In such circumstances, it may be desirable to configure the electronic apparatus such that the electronic apparatus conserves battery power. In many circumstances, a display of an electronic apparatus utilizes a large portion of available battery power. As such, it may be desirable to configure the electronic apparatus such that the electronic apparatus lacks a robust display. In at least one example embodiment, an apparatus is absent a display. For example, the apparatus may be absent an alphanumeric display, a graphical display, and/or the like. An alphanumeric display may be a display that is configured to display characters, letters, numbers, and/or the like. For example, an alphanumeric display may be a light emitting diode display, a liquid crystal display, a vacuum fluorescent display, a dot matrix display, a multiple-segment display, and/or the like. A graphical display may be a display that is configured to display visual information, graphical information, characters, letters, numbers, and/or the like. For example, a graphical display may be a light emitting diode display, a liquid crystal display, a plasma display, an organic light emitting diode display, and/or the like.

In many circumstances, it may nonetheless be desirable to allow communication of information to a user of the electronic apparatus in a manner that utilizes a reduced amount of battery power. For example, the electronic apparatus may communicate information to the user by way of a light emitting diode, a speaker, and/or the like. In at least one example embodiment, an apparatus comprises at least one non-alphanumeric light emitting diodes. The apparatus may comprise a plurality of non-alphanumeric light emitting diodes. In at least one example embodiment, a non-alphanumeric light emitting diode is a light emitting diode configured such that the light emitting diode is unable to indicate a character, a letter, a number, and/or the like. In at least one example embodiment, a non-alphanumeric light emitting diode is a light emitting diode configured such that the light emitting diode is unable to indicate visual information, graphical information, a character, a letter, a number, and/or the like. In at least one example embodiment, a non-alphanumeric light emitting diode fails to correspond with a portion of an alphanumeric display, a portion of a graphical display, and/or the like. The non-alphanumeric light emitting diode may be a light emitting diode configured such that the light emitting diode may indicate an on state, an off state, a color, and/or the like.

In many circumstances, it may be desirable to limit the types of, number of, etc. input interfaces comprised by an electronic apparatus. For example, it may be desirable to provide a user of the electronic apparatus with a user experience that avoids complex and confusing interactions with the electronic apparatus. In many circumstances, input interfaces may utilize a large portion of available battery power. As such, it may be desirable to configure the electronic apparatus such that the electronic apparatus lacks an input interface that requires more battery power than a different input interface. For example, a touch-sensor-based input interface may drain battery power more quickly than a different type of input interface, such as a button input interface. In at least one example embodiment, an apparatus is absent a touch-sensor-based input interface.

FIGURE 3 is a diagram showing an apparatus according to at least one example embodiment. FIGURE 3 depicts apparatus 300. As shown in the example of FIGURE 3, apparatus 300 comprises non-alphanumeric light emitting diodes 302. Each of non-alphanumeric light emitting diodes 302 may be configured to indicate an on state, an off state, a color, and/or the like. Each of non-alphanumeric light emitting diodes 302 may be controlled individually, may each indicate specific information intended to be communicated to a user of the apparatus, and/or the like.

In many circumstances, it may be desirable to permit a user to interact with an electronic apparatus notwithstanding the lack of a robust input interface. For example, the electronic apparatus may lack a user-accessible button input interface, lack a physical input interface that is sufficient for complex interactions with the electronic apparatus, and/or the like. In such an example, it may be desirable to configure the electronic apparatus such that a user of the electronic apparatus may communicate with the electronic apparatus, indicate a desire of the user to cause the electronic apparatus to perform certain operations, and/or the like. In at least one example embodiment, an apparatus receives motion information indicative of an input gesture. The motion information may be received by way of at least one motion sensor. In at least one example embodiment, the motion sensor is comprised by the apparatus. The motion sensor may be an accelerometer motion sensor, a gyroscopic motion sensor, a micro vibration motion sensor, a rotation vector motion sensor, a geomagnetic field motion sensor, a gravity motion sensor, an orientation motion sensor, and/or the like. The motion information and the input gesture may be similar as described regarding FIGURES 4A-4J.

In many circumstances, an electronic apparatus comprises a firmware. Firmware is often stored by the electronic apparatus in persistent memory, and comprises instructions that facilitate the operation of the electronic apparatus. For example, the firmware of an electronic apparatus may provide one or more control program for the electronic apparatus. The firmware may be stored in non-volatile memory comprised by the apparatus, for example, in flash memory, in read-only memory, and/or the like. In at least one example embodiment, firmware comprises instructions associated with basic functions of an apparatus. In such an example embodiment, the firmware may provide services to higher-level software comprised by the apparatus. In at least one example embodiment, firmware is be associated with an embedded system.

From time to time, a user may desire to update the firmware of the user's electronic apparatus. For example, the more recent firmware may eliminate a bug in the firmware, may add additional features to the electronic apparatus, and/or the like. In such circumstances, the user of the electronic apparatus may desire to indicate the user's desire to have the electronic apparatus firmware updated to the electronic apparatus. In at least one example embodiment, an apparatus
determines that an input gesture is a firmware update gesture. In such an example embodiment, the firmware update gesture may be indicative of a directive to update a firmware of the apparatus. Updating the firmware of the apparatus may be associated with overwriting the existing firmware, modifying the existing firmware, and/or the like.

In many circumstances, a firmware for an electronic apparatus may be stored on a separate apparatus. For example, the firmware may be stored on a separate apparatus, on a server, in a firmware repository on a remote service platform, and/or the like. In at least one example embodiment, the apparatus is a peripheral apparatus, and the separate apparatus is a host apparatus. For example, as depicted in FIGURE 2A, the apparatus may be apparatus 202, and the separate apparatus may be host 204. In at least one example embodiment, the separate apparatus is a server apparatus. For example, as depicted in FIGURE 2B, the apparatus may be apparatus 222, and the separate apparatus may be server 226. As such, in order to facilitate updating of the firmware of the electronic apparatus, it may be desirable to configure the electronic apparatus such that the electronic apparatus may retrieve the firmware from the separate apparatus, receive the firmware from the separate apparatus, and/or the like. In at least one example embodiment, an apparatus sends a firmware download request to a separate apparatus. The sending of the firmware download request may be based, at least in part, on the determination that the input gesture is the firmware update. For example, the sending of the firmware download request may be caused by the determination that the input gesture is the firmware update. In at least one example embodiment, an apparatus sends the firmware download request to the separate apparatus by way of at least one proximity-based communication channel. The proximity-based communication channel may be similar as described regarding FIGURES 2A-2B.

In many circumstances, a firmware is specific to a particular electronic apparatus, a particular type of electronic apparatus, and/or the like. For example, an electronic apparatus of a type may comprise a firmware, and a different electronic apparatus of the type may comprise a different firmware. In another example, an electronic apparatus of a type may comprise a firmware, and an electronic apparatus of a different type may comprise a different firmware. As such, it may be desirable to request a specific firmware based, at least in part, on an identity of an electronic apparatus, a type of the electronic apparatus, and/or the like. In at least one example embodiment, an apparatus determines an identity of the apparatus. For example, the apparatus may determine an identification number that identifies the apparatus, a unique identifier that identifies the apparatus, and/or the like. In such an example embodiment, the firmware download request may comprise information indicative of the identity of the apparatus. As such, the firmware may be based, at least in part, on the identity of the apparatus. In at least one example embodiment, an apparatus determines a type of the apparatus. For example, the apparatus may retrieve a model number associated with the apparatus, a serial designation associated with the apparatus, etc. from memory, from a separate apparatus, and/or the like. In such an example embodiment, the firmware download request may comprise information indicative of the type of the apparatus. As such, the firmware may be based, at least in part, on the type of the apparatus.

In at least one example embodiment, an apparatus receives firmware update information from a separate apparatus. For example, the apparatus may receive the firmware update information from the separate apparatus based, at least in part, on the firmware download request. The firmware update information may comprise a firmware for the apparatus, a portion of the firmware for the apparatus, instructions regarding the updating of the firmware of the apparatus, and/or the like. In at least one example embodiment, an apparatus updates the firmware of the apparatus based, at least in part, on the firmware update information. For example, the firmware update information may comprise the entirety of the firmware for the apparatus. In such an example, updating of the firmware may comprise replacing of the existing firmware by the firmware comprised by the firmware update information. In another example, the firmware update information may comprise a portion of the firmware for the apparatus. In such an example, updating of the firmware may comprise supplementing of the existing firmware with the portion of the firmware comprised by the firmware update information. In yet another example, the firmware update information may comprise instructions regarding the updating of the firmware of the apparatus. In such an example, the updating of the firmware may comprising modification of the firmware based, at least in part, on the instructions comprised by the firmware update information, modification of the firmware in accordance with the instructions comprised by the firmware update information, and/or the like. In at least one example embodiment, the apparatus receives the firmware update information from the separate apparatus by way of at least one proximity-based communication channel. The proximity-based communication channel may be similar as described regarding FIGURES 2A-2B.

In at least one example embodiment, an apparatus automatically receives firmware update information. For example, the apparatus may periodically receive firmware update information from a separate apparatus, may retrieve firmware update information from the separate apparatus at predetermined intervals, and/or the like. In such an example embodiment, updating of the firmware of the apparatus may be based, at least in part, on the previously received firmware update information. As such, a user performing a firmware update gesture by way of the apparatus may indicate a desire to cause the apparatus to update the firmware of the apparatus based, at least in part, on the most recently received firmware update information.

In many circumstances, a user may desire to perceive some sort of visual indication that communicates various information regarding the user's interaction with the apparatus, the operations being performed by the apparatus, and/or the like. For example, the user may desire to perceive an indication that confirms receipt of motion information, an input gesture, a firmware update gesture, confirmation of receipt of firmware update information, and/or the like. In at least one example embodiment, an apparatus displays a visual signal by way of one or more non-alphanumeric light emitting diodes.

In at least one example embodiment, a visual signal signifies the receipt of motion information indicative of the input gesture. In such an example embodiment, the visual signal may be caused, at least in part, by the receipt of motion information indicative of the input gesture. In this manner, the visual signal may indicate to a user of the apparatus that the apparatus has received the motion information indicative of the input gesture.

In at least one example embodiment, a visual signal signifies the determination that the input gesture is the firmware update gesture. In such an example embodiment, the visual signal may be caused, at least in part, by the determination that the input gesture is the firmware update gesture. In this manner, the visual signal may indicate to a user of the apparatus that the apparatus has determined that the input gesture is the firmware update gesture.

In at least one example embodiment, a visual signal signifies the sending of the firmware download request to the separate apparatus. In such an example embodiment, the visual signal may be caused, at least in part, by the sending of the firmware download request to the separate apparatus. In this manner, the visual signal may indicate to a user of the apparatus that the apparatus has sent the firmware download request to the separate apparatus.

In at least one example embodiment, a visual signal signifies the receipt of the firmware update information from the separate apparatus. In such an example embodiment, the visual signal may be caused, at least in part, by the receipt of the firmware update information from the separate apparatus. In this manner, the visual signal may indicate to a user of the apparatus that the apparatus has received the firmware update information from the separate apparatus.

In at least one example embodiment, a visual signal signifies the update of the firmware of the apparatus. In such an example embodiment, the visual signal may be caused, at least in part, by the update of the firmware of the apparatus. In this manner, the visual signal may indicate to a user of the apparatus that the apparatus has updated the firmware of the apparatus.

FIGURES 4A-4J are diagrams illustrating a predetermined motion according to at least one example embodiment. The examples of FIGURES 4A-4J are merely examples of predetermined motion, and do not limit the scope of the claims. For example, orientation may vary, pattern may vary, direction may vary, and/or the like. Even though the examples of FIGURES 4A-4J depict twodimensional movement, a predetermined motion may be a three dimensional motion.

In at least one example embodiment, a predetermined motion is a motion that an apparatus is capable of identifying. For example, an apparatus may be capable of identifying the predetermined motions of FIGURES 4A-4J. In at least one example embodiment, a predetermined motion corresponds with an input gesture. An input gesture may, for example, be performed by a user and may be detectable by an apparatus worn by the user. For example, an apparatus may be configured to detect and/or receive motion information, and determine that the motion information is indicative of a specific input gesture.

An apparatus may determine that a motion, such as a motion performed by a user, a motion performed by a user by way of the apparatus, and/or the like, corresponds with a predetermined motion by evaluating reference motion information. The apparatus may access reference motion information. In at least one example embodiment, the reference motion information comprises information for identifying that a motion corresponds with a predetermined motion. The reference motion information associated with the plurality of predetermined motions may be accessed by way of a memory, by way of a separate apparatus, and/or the like. Reference motion information may comprise sets of representations that are associated with predetermined motions. The set of representations that is associated with a predetermined motion may be a set of scalar representation, a set of vector representations, a set of purely directional vector representations, and/or the like. In an example embodiment, the sets of representations associated with the predetermined motions are normalized. Normalization may comprise each set of representations having a common number of representations. The common number may be a predetermined number of representations for each set of representations. Normalization may, for example, be characterized by each representation of each set of representations having a normalized structure. Normalization may, for example, be characterized by each set of representations having a common size. In at least one example embodiment, a set of representations associated with one or more predetermined motions may comprise parameters of statistical models. Such parameters and/or statistical models may be based, at least in part, on sensor data sequences collected from performance of the predetermined motions. In one or more example embodiments, there may be a hidden Markov model trained for each of the predetermined motions. In such an example embodiment, determining a gesture performed by a user may comprise evaluating the likelihood of each hidden Markov model having created the sensor data corresponding to the user's gesture, and selecting the predetermined motion corresponding to the model giving the largest likelihood.

FIGURE 4A illustrates an example of a predetermined motion corresponding with a straight rightward motion. FIGURE 4B illustrates an example of a predetermined motion corresponding with a straight leftward motion. FIGURE 4C illustrates an example of a predetermined motion corresponding with an upward rightward arcing motion. FIGURE 4D illustrates an example of a predetermined motion corresponding with a downward leftward arcing motion. FIGURE 4E illustrates an example of a predetermined motion corresponding with a downward motion followed by a rightward motion. FIGURE 4F illustrates an example of a predetermined motion corresponding with a rightward motion followed by a downward motion. FIGURE 4G illustrates an example of a predetermined motion corresponding with a clockwise circular motion. FIGURE 4H illustrates an example of a predetermined motion corresponding with a counter-clockwise circular motion. FIGURE 4I illustrates an example of a predetermined motion corresponding with a Z-shaped motion. FIGURE 4J illustrates an example of a predetermined motion corresponding with a crossing motion.

In many circumstances, it may be desirable to associate specific predetermined motions with specific input gestures. For example, a user may desire to interact with an electronic apparatus by way of simple input gestures, easy to remember motions, intuitive movements, and/or the like. In at least one example embodiment, an input gesture corresponds with motion information indicative of movement of the apparatus in a circular motion. For example, a user may move the apparatus in a single loop, in a double loop, in a triple loop, and/or the like. For example, the user may move the apparatus in conformance with the predetermined motion depicted in the example of FIGURE 4G, FIGURE 4H, and/or the like. In at least one example embodiment, an input gesture corresponds with motion information indicative of rotation of the apparatus. For example, a user may spin the apparatus, may rotate the apparatus in several directions, and/or the like. In at least one example embodiment, an input gesture corresponds with motion information indicative of dropping of the apparatus. For example, a user may drop the apparatus onto a surface, may drop and catch the apparatus, and/or the like. For example, the example of FIGURE 4B may reoriented such that the predetermined motion indicates downward motion. In at least one example embodiment, an input gesture corresponds with motion information indicative of throwing of the apparatus. For example, a user may toss the apparatus vertically into the air, may throw the apparatus horizontally onto a surface, and/or the like. For example, the user may move the apparatus in conformance with a combination of the predetermined motions depicted in the examples of FIGURE 4A, FIGURE 4B, and/or the like. In at least one example embodiment, an input gesture corresponds with motion information indicative of shaking of the apparatus. For example, the user may vigorously shake the apparatus, jostle the apparatus, bump the apparatus about, and/or the like. For example, the user may repeatedly move the apparatus in conformance with any of the predetermined motions depicted in the examples of FIGURE 4A-4J, and/or the like.

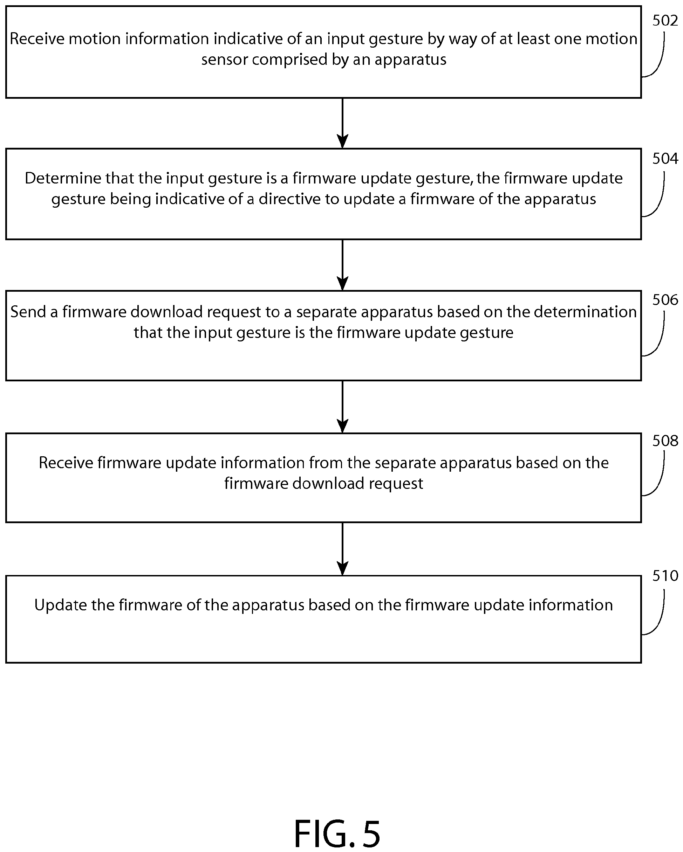

FIGURE 5 is a flow diagram illustrating activities associated with updating a firmware of an apparatus according to at least one example embodiment. In at least one example embodiment, there is a set of operations that corresponds with the activities of FIGURE 5. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 5.

At block 502, the apparatus receives motion information indicative of an input gesture by way of at least one motion sensor comprised by the apparatus. The receipt, the motion information, the input gesture, the motion sensor, and the apparatus may be similar as described regarding FIGURES 2A-2B, FIGURE 4, and FIGURES 4A-4J.

At block 504, the apparatus determines that the input gesture is a firmware update gesture. In at least one example embodiment, the firmware update gesture is indicative of a directive to update a firmware of the apparatus. The determination, the firmware update gesture, the directive to update, and the firmware may be similar as described regarding FIGURES 2A-2B, FIGURE 4, and FIGURES 4A-4J.

At block 506, the apparatus sends a firmware download request to a separate apparatus based, at least in part, on the determination that the input gesture is the firmware update gesture. The sending, the firmware download request, and the separate apparatus may be similar as described regarding FIGURES 2A-2B, FIGURE 4, and FIGURES 4A-4J.

At block 508, the apparatus receives firmware update information from the separate apparatus based, at least in part, on the firmware download request. The receipt and the firmware update information may be similar as described regarding FIGURES 2A-2B and FIGURE 4.

At block 510, the apparatus updates the firmware of the apparatus based, at least in part, on the firmware update information. The updating of the firmware may be similar as described regarding FIGURES 2A-2B and FIGURE 4.

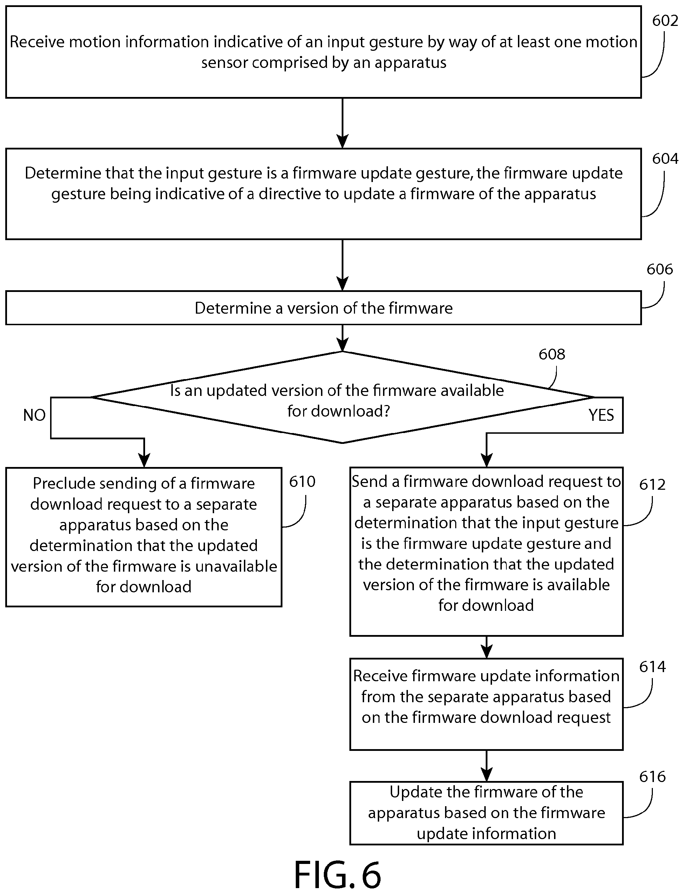

FIGURE 6 is a flow diagram illustrating activities associated with determining whether there is an updated version of a firmware available for download according to at least one example embodiment. In at least one example embodiment, there is a set of operations that corresponds with the activities of FIGURE 6. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 6.

In many circumstances, a firmware of an apparatus is associated with a particular version. For example, a firmware of an apparatus may be identified by a version, and a different firmware of the apparatus may be identified by a different version. In many circumstances, it may be desirable to configure an apparatus such that the apparatus may distinguish between an older version of a firmware and a newer version of the firmware. For example, as discussed previously, the newer version of the firmware may eliminate bugs that may have been present in the older version of the firmware, may comprise information associated with additional features and/or functionality that the older version of the firmware may lack, and/or the like. In at least one example embodiment, an apparatus determines a version of a firmware. In such an example embodiment, based, at least in part, on the version of the firmware, the apparatus may determine that an updated version of the firmware is available for download. An updated version of the firmware may be a version of the firmware that is more recent that the current version of the firmware comprised by the apparatus. In such an example embodiment, the apparatus may send the firmware download request to the separate apparatus based, at least in part, on the determination that the updated version of the firmware is available for download. In such an example embodiment, the firmware update information may comprise at least a portion of the updated version of the firmware. In order to facilitate updating of the firmware based, at least in part, on the updated version of the firmware, the firmware download request sent to the separate apparatus may identify the version of the firmware, the updated version of the firmware, and/or the like.

In some circumstances, there may not be an updated version of the firmware for the apparatus. For example, the version of the firmware may be the most recent version of the firmware, the updated version of the firmware may be temporarily unavailable, and/or the like. In at least one example embodiment, an apparatus determines that an updated version of the firmware is unavailable for download. In such an example embodiment, it may be desirable to preclude further performance of operations associated with updating of the firmware. For example, it may be desirable to conserve battery power, eliminate expendable power consumption, and/or the like. In at least one example embodiment, an apparatus precludes sending of a firmware download request to the separate apparatus based, at least in part, on the determination that the updated version of the firmware is unavailable for download.

At block 602, the apparatus receives motion information indicative of an input gesture by way of at least one motion sensor comprised by the apparatus. The receipt, the motion information, the input gesture, the motion sensor, and the apparatus may be similar as described regarding FIGURES 2A-2B, FIGURE 4, and FIGURES 4A-4J.

At block 604, the apparatus determines that the input gesture is a firmware update gesture. In at least one example embodiment, the firmware update gesture is indicative of a directive to update a firmware of the apparatus. The determination, the firmware update gesture, the directive to update, and the firmware may be similar as described regarding FIGURES 2A-2B, FIGURE 4, and FIGURES 4A-4J.

At block 606, the apparatus determines a version of the firmware.

At block 608, the apparatus determines whether there is an updated version of the firmware available for download. If the apparatus determines that an updated version of the firmware is unavailable for download, flow proceeds to block 610. If the apparatus determines that an updated version of the firmware is available for download, flow proceeds to block 612.

At block 610, the apparatus precludes sending of a firmware download request to a separate apparatus based, at least in part, on the determination that the updated version of the firmware is unavailable for download.

At block 612, the apparatus sends a firmware download request to a separate apparatus based, at least in part, on the determination that the input gesture is the firmware update gesture and the determination that the updated version of the firmware is available for download.

At block 614, the apparatus receives firmware update information from the separate apparatus based, at least in part, on the firmware download request. The receipt and the firmware update information may be similar as described regarding FIGURES 2A-2B and FIGURE 4.

At block 616, the apparatus updates the firmware of the apparatus based, at least in part, on the firmware update information. The updating of the firmware may be similar as described regarding FIGURES 2A-2B and FIGURE 4.

In some circumstances, it may be desirable to avoid operations associated with determination of a version of a firmware, preclusion of operations associated with updating of the firmware based, at least in part, on the version of the firmware, and/or the like. For example, a user may desire to update the firmware of an apparatus notwithstanding the version of the firmware, the version of the updated firmware, and/or the like. For example, the user may be experiencing problems with the apparatus. In such an example, the problems may be caused, at least in part, by a corrupt firmware, a faulty firmware installation, and/or the like. In such an example, the user may desire to reinstall the firmware of the apparatus notwithstanding the version of the firmware, the version of the updated firmware, and/or the like. In at least one example embodiment, an apparatus sends the firmware download request to a separate apparatus regardless of a version of the firmware. In at least one example embodiment, an apparatus receives the firmware update information from the separate apparatus regardless of a version of the firmware. In at least one example embodiment, an apparatus updates the firmware of the apparatus regardless of a version of the firmware.

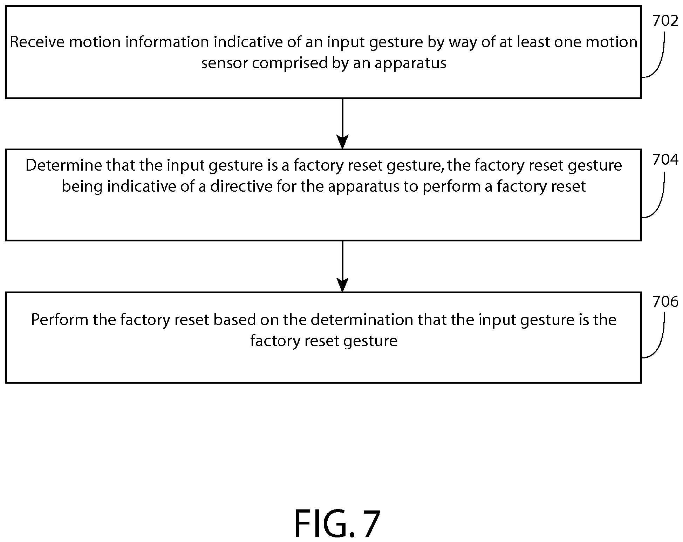

FIGURE 7 is a flow diagram illustrating activities associated with performing a factory reset according to at least one example embodiment. In at least one example embodiment, there is a set of operations that corresponds with the activities of FIGURE 7. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 7.

In some circumstances, a user may reset an electronic apparatus such that any settings and/or configurations that may have been modified are returned to factory specifications and/or default values. For example, the user may desire to cause the electronic apparatus to perform a factory reset. In at least one example embodiment, a factory reset is a software restore of an electronic apparatus to its original system state. The factory reset may be performed by erasing some of or all of the information stored on the electronic apparatus such that the software operating on the electronic apparatus is restored to its original manufacturer settings, default values, and/or the like. A factory reset may erase some of or all of the data, settings, and/or applications that may have been previously installed on the electronic apparatus. In such circumstances, a user may desire to cause the electronic apparatus to perform the factory reset in order to attempt to fix a software issue, to restore the electronic apparatus to its original settings, and/or the like.

In at least one example embodiment, an apparatus receives motion information indicative of an input gesture by way of a motion sensor comprised by the apparatus. In such an example embodiment, the apparatus may determine that the input gesture is a factory reset gesture. The factory reset gesture may be indicative of a directive for the apparatus to perform a factory reset. In such an example embodiment, the apparatus may perform the factory reset based, at least in part, on the determination that the other input gesture is the factory reset gesture. In at least one example embodiment, performance of the factory reset comprises changing of at least one apparatus setting value to at least one default apparatus setting value. For example, the apparatus may have been shipped from the manufacturer of the apparatus with default software, default apparatus setting values, and/or the like. Subsequently, a user of the apparatus, a piece of software installed on the apparatus, etc. may have caused modification to one or more of the default apparatus setting values. In such an example, a factory reset may restore the modified apparatus setting values to their respective default apparatus setting values.

In at least one example embodiment, the activities illustrated in the example of FIGURE 7 are performed subsequent to the activities illustrated in the example of FIGURE 5. For example, an apparatus may receive a first input gesture, determine that the first input gesture is a firmware update gesture, and cause updating of the firmware of the apparatus. In such an example, the apparatus may receive a second input gesture, determine that the second input gesture is a factory reset gesture, and perform the factory reset. In such an example, the first input gesture and the second input gesture may be different input gestures. For example, the first input gesture may correspond with the predetermined motion depicted in FIGURE 2G, and the second input gesture may correspond with the predetermined motion depicted in FIGURE 2J.

At block 702, the apparatus receives motion information indicative of an input gesture by way of at least one motion sensor comprised by the apparatus. The receipt, the motion information, the input gesture, the motion sensor, and the apparatus may be similar as described regarding FIGURES 2A-2B, FIGURE 4, and FIGURES 4A-4J.

At block 704, the apparatus determines that the input gesture is a factory reset gesture. In at least one example embodiment, the factory reset gesture is indicative of a directive for the apparatus to perform a factory reset.

At block 706, the apparatus performs the factory reset based, at least in part, on the determination that the input gesture is the factory reset gesture.

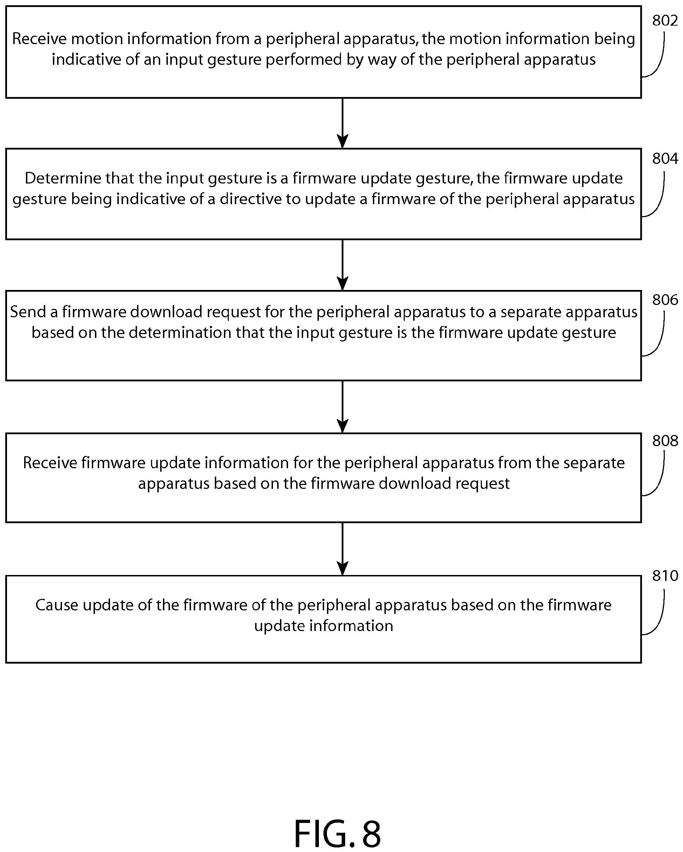

FIGURE 8 is a flow diagram illustrating activities associated with causing update of a firmware of a peripheral apparatus according to at least one example embodiment. In at least one example embodiment, there is a set of operations that corresponds with the activities of FIGURE 8. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 8.

In some circumstances, it may be desirable to manage various operations of a peripheral apparatus from a host apparatus. For example, the peripheral apparatus may be characterized by limited processing capacity, limited connectivity, and/or the like. In such circumstances, it may be desirable to configure an apparatus, for example a host apparatus, such that the apparatus may manage operations associated with updating the firmware of the peripheral apparatus, with performing a factory reset of the peripheral apparatus, and/or the like. In at least one example embodiment, an apparatus receives motion information from a peripheral apparatus. In such an example embodiment, the motion information may be indicative of an input gesture performed by way of the peripheral apparatus. An input gesture performed by way of the peripheral apparatus indicated that the peripheral apparatus was caused to be moved in accordance with the motion information associated with the input gesture.

In many circumstances, it may be desirable to associate specific predetermined motions with specific input gestures. For example, a user may desire to interact with a peripheral apparatus by way of simple input gestures, easy to remember motions, intuitive movements, and/or the like. In at least one example embodiment, an input gesture corresponds with motion information indicative of movement of the peripheral apparatus in a circular motion. For example, a user may move the peripheral apparatus in a single loop, in a double loop, in a triple loop, and/or the like. For example, the user may move the peripheral apparatus in conformance with the predetermined motion depicted in the example of FIGURE 4G, FIGURE 4H, and/or the like. In at least one example embodiment, an input gesture corresponds with motion information indicative of rotation of the peripheral apparatus. For example, a user may spin the peripheral apparatus, may rotate the peripheral apparatus in several directions, and/or the like. In at least one example embodiment, an input gesture corresponds with motion information indicative of dropping of the peripheral apparatus. For example, a user may drop the peripheral apparatus onto a surface, may drop and catch the peripheral apparatus, and/or the like. For example, the example of FIGURE 4B may reoriented such that the predetermined motion indicates downward motion. In at least one example embodiment, an input gesture corresponds with motion information indicative of throwing of the peripheral apparatus. For example, a user may toss the peripheral apparatus vertically into the air, may throw the peripheral apparatus horizontally onto a surface, and/or the like. For example, the user may move the peripheral apparatus in conformance with the predetermined motion depicted in the example of FIGURE 4A, FIGURE 4B, and/or the like. In at least one example embodiment, an input gesture corresponds with motion information indicative of shaking of the peripheral apparatus. For example, the user may vigorously shake the peripheral apparatus, jostle the peripheral apparatus, bump the peripheral apparatus about, and/or the like. For example, the user may repeatedly move the peripheral apparatus in conformance with any of the predetermined motions depicted in the examples of FIGURE 4A-4J, and/or the like.

In at least one example embodiment, an apparatus determines that the input gesture is a firmware update gesture. In such an example embodiment, the firmware update gesture may be indicative of a directive to update a firmware of the peripheral apparatus. In such an example embodiment, the apparatus may send a firmware download request for the peripheral apparatus to a separate apparatus based, at least in part, on the determination that the input gesture is the firmware update gesture.

In many circumstances, a firmware is specific to a particular electronic apparatus, a particular type of electronic apparatus, and/or the like. For example, an electronic apparatus of a type may comprise a firmware, and a different electronic apparatus of the type may comprise a different firmware. In another example, an electronic apparatus of a type may comprise a firmware, and an electronic apparatus of a different type may comprise a different firmware. As such, it may be desirable to request a specific firmware based, at least in part, on an identity of an electronic apparatus, a type of the electronic apparatus, and/or the like. In at least one example embodiment, an apparatus determines an identity of the peripheral apparatus. For example, the apparatus may determine an identification number that identifies the peripheral apparatus, a unique identifier that identifies the peripheral apparatus, and/or the like. For example, the apparatus may send a request for information indicative of an identity of peripheral apparatus to the peripheral apparatus, and receive the information indicative of the identity of the peripheral apparatus from the peripheral apparatus. In such an example embodiment, the firmware download request may comprise information indicative of the identity of the peripheral apparatus. As such, the firmware may be based, at least in part, on the identity of the peripheral apparatus. In at least one example embodiment, an apparatus determines a type of the peripheral apparatus. For example, the apparatus may determine a model number associated with the peripheral apparatus, a serial designation associated with the peripheral apparatus, and/or the like. For example, the apparatus may send a request for information indicative of a type of peripheral apparatus to the peripheral apparatus, and receive the information indicative of the type of the peripheral apparatus from the peripheral apparatus. In such an example embodiment, the firmware download request may comprise information indicative of the type of the peripheral apparatus. As such, the firmware may be based, at least in part, on the type of the peripheral apparatus.

In at least one example embodiment, an apparatus receives firmware update information for the peripheral apparatus from the separate apparatus based, at least in part, on the firmware download request. In such an example embodiment, the apparatus may cause update of the firmware of the peripheral apparatus based, at least in part, on the firmware update information. For example, the causation of update of the firmware of the peripheral apparatus may comprise sending of the firmware update information to the peripheral apparatus. In another example, the causation of updating of the firmware of the peripheral apparatus may comprise determination of a firmware update directive based, at least in part, on the receipt of the firmware update information for the peripheral apparatus from the separate apparatus. In such an example embodiment, the apparatus may send the firmware update directive to the peripheral apparatus, send the firmware update information to the peripheral apparatus, and/or the like. In at least one example embodiment, the firmware update directive comprises at least a portion of the firmware update information. As such, the apparatus may send the firmware update directive to the peripheral apparatus such that the peripheral apparatus performs the updating of the firmware in conformance with the firmware update directive.

At block 802, the apparatus receives motion information from a peripheral apparatus. In at least one example embodiment, the motion information is indicative of an input gesture performed by way of the peripheral apparatus. The receipt, the motion information, the peripheral apparatus, and the input gesture may be similar as described regarding FIGURES 2A-2B, FIGURE 4, and FIGURES 4A-4J.

At block 804, the apparatus determines that the input gesture is a firmware update gesture. In at least one example embodiment, the firmware update gesture is indicative of a directive to update a firmware of the peripheral apparatus. The determination, the firmware update gesture, the directive to update, and the firmware may be similar as described regarding FIGURES 2A-2B, FIGURE 4, and FIGURES 4A-4J.

At block 806, the apparatus sends a firmware download request for the peripheral apparatus to a separate apparatus based, at least in part, on the determination that the input gesture is the firmware update gesture. The sending, the firmware download request, and the separate apparatus may be similar as described regarding FIGURES 2A-2B, FIGURE 4, and FIGURES 4A-4J.

At block 808, the apparatus receives firmware update information for the peripheral apparatus from the separate apparatus based, at least in part, on the firmware download request. The receipt and the firmware update information may be similar as described regarding FIGURES 2A-2B and FIGURE 4.

At block 810, the apparatus updates the firmware of the peripheral apparatus based, at least in part, on the firmware update information. The updating of the firmware may be similar as described regarding FIGURES 2A-2B and FIGURE 4.

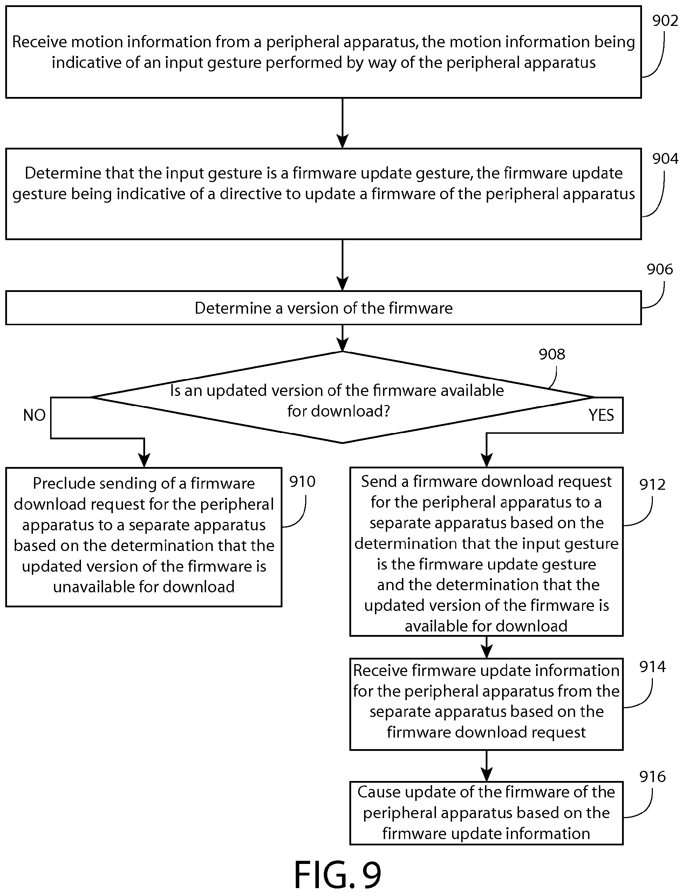

FIGURE 9 is a flow diagram illustrating activities associated with determining whether there is an updated version of a firmware available for download according to at least one example embodiment. In at least one example embodiment, there is a set of operations that corresponds with the activities of FIGURE 9. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 9.

In many circumstances, a firmware of an apparatus is associated with a particular version. For example, a firmware of a peripheral apparatus may be identified by a version, and a different firmware of the peripheral apparatus may be identified by a different version. In many circumstances, it may be desirable to configure an apparatus such that the apparatus may distinguish between an older version of a firmware for the peripheral apparatus and a newer version of the firmware for the peripheral apparatus. For example, as discussed previously, the newer version of the firmware may eliminate bugs that may have been present in the older version of the firmware, may comprise information associated with additional features and/or functionality that the older version of the firmware may lack, and/or the like. In at least one example embodiment, an apparatus determines a version of a firmware. For example, the apparatus may determine a version of a firmware for a peripheral apparatus. In such an example embodiment, the apparatus may determine that an updated version of the firmware for the peripheral apparatus is available for download based, at least in part, on the version of the firmware of the peripheral apparatus. An updated version of the firmware may be a version of the firmware that is more recent that the current version of the firmware comprised by the peripheral apparatus. In such an example embodiment, the apparatus may send the firmware download request for the peripheral apparatus to the separate apparatus based, at least in part, on the determination that the updated version of the firmware is available for download. Sending of the firmware download request for the peripheral apparatus may comprise the apparatus sending the firmware download request for the peripheral apparatus to a server, the peripheral apparatus sending the firmware download request to the server, and/or the like. In such an example embodiment, the firmware update information may comprise at least a portion of the updated version of the firmware. In order to facilitate updating of the firmware based, at least in part, on the updated version of the firmware, the firmware download request for the peripheral apparatus that is sent to the separate apparatus may identify the version of the firmware, the updated version of the firmware, and/or the like.

In some circumstances, there may not be an updated version of the firmware for the peripheral apparatus. For example, the version of the firmware may be the most recent version of the firmware, the updated version of the firmware may be temporarily unavailable, and/or the like. In at least one example embodiment, an apparatus determines that an updated version of the firmware is unavailable for download. In such an example embodiment, it may be desirable to preclude further performance of operations associated with updating of the firmware. For example, it may be desirable to conserve battery power, eliminate expendable power consumption, and/or the like. In at least one example embodiment, an apparatus precludes sending of a firmware download request for the peripheral apparatus to the separate apparatus based, at least in part, on the determination that the updated version of the firmware is unavailable for download.

At block 902, the apparatus receives motion information from a peripheral apparatus. In at least one example embodiment, the motion information is indicative of an input gesture performed by way of the peripheral apparatus. The receipt, the motion information, the peripheral apparatus, and the input gesture may be similar as described regarding FIGURES 2A-2B, FIGURE 4, and FIGURES 4A-4J.

At block 904, the apparatus determines that the input gesture is a firmware update gesture. In at least one example embodiment, the firmware update gesture is indicative of a directive to update a firmware of the peripheral apparatus. The determination, the firmware update gesture, the directive to update, and the firmware may be similar as described regarding FIGURES 2A-2B, FIGURE 4, and FIGURES 4A-4J.

At block 906, the apparatus determines a version of the firmware.

At block 908, the apparatus determines whether there is an updated version of the firmware available for download. If the apparatus determines that an updated version of the firmware is unavailable for download, flow proceeds to block 910. If the apparatus determines that an updated version of the firmware is available for download, flow proceeds to block 912.

At block 910, the apparatus precludes sending of a firmware download request for the peripheral apparatus to a separate apparatus based, at least in part, on the determination that the updated version of the firmware is unavailable for download.

At block 912, the apparatus sends a firmware download request for the peripheral apparatus to a separate apparatus based, at least in part, on the determination that the input gesture is the firmware update gesture and the determination that the updated version of the firmware is available for download.

At block 914, the apparatus receives firmware update information for the peripheral apparatus from the separate apparatus based, at least in part, on the firmware download request. The receipt and the firmware update information may be similar as described regarding FIGURES 2A-2B and FIGURE 4.

At block 916, the apparatus updates the firmware of the peripheral apparatus based, at least in part, on the firmware update information. The updating of the firmware may be similar as described regarding FIGURES 2A-2B and FIGURE 4.

In some circumstances, it may be desirable to avoid operations associated with determination of a version of a firmware, avoid preclusion of operations associated with updating of the firmware based, at least in part, on the version of the firmware, and/or the like. For example, a user may desire to update the firmware of a peripheral apparatus notwithstanding the version of the firmware, the version of the updated firmware, and/or the like. For example, the user may be experiencing problems with the peripheral apparatus. In such an example, the problems may be caused, at least in part, by a corrupt firmware, a faulty firmware installation, and/or the like. In such an example, the user may desire to reinstall the firmware of the peripheral apparatus notwithstanding the version of the firmware, the version of the updated firmware, and/or the like. In at least one example embodiment, an apparatus sends the firmware download request for the peripheral apparatus to a separate apparatus regardless of a version of the firmware. In at least one example embodiment, an apparatus receives the firmware update information for the peripheral apparatus from the separate apparatus regardless of a version of the firmware. In at least one example embodiment, an apparatus causes updating of the firmware of the peripheral apparatus regardless of a version of the firmware.

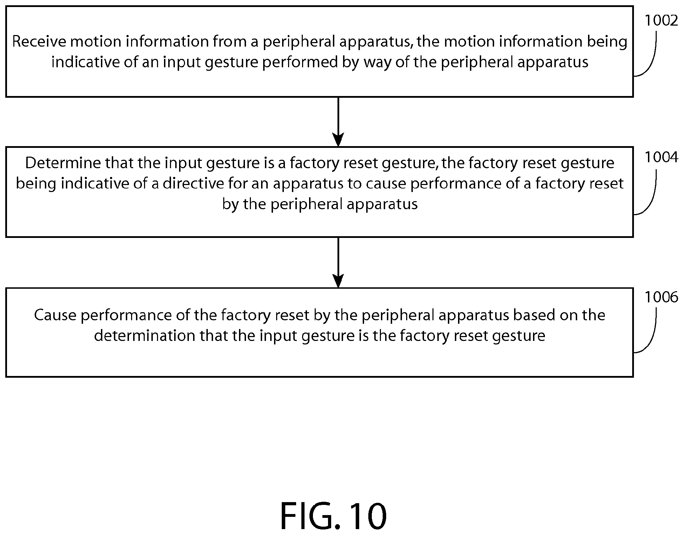

FIGURE 10 is a flow diagram illustrating activities associated with causing performance of a factory reset by a peripheral apparatus according to at least one example embodiment. In at least one example embodiment, there is a set of operations that corresponds with the activities of FIGURE 10. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 10.

In some circumstances, a user may reset an electronic apparatus such that any settings and/or configurations that may have been modified are returned to factory specifications and/or default values. For example, the user may desire to cause the electronic apparatus to perform a factory reset. In such circumstances, it may be desirable to configure an apparatus, such as a host apparatus, to cause performance of a factory reset by a peripheral apparatus.

In at least one example embodiment, an apparatus receives motion information from a peripheral apparatus. In such an example embodiment, the motion information may be indicative of an input gesture performed by way of a peripheral apparatus. In such an example embodiment, the apparatus may determine that the input gesture is a factory reset gesture. The factory reset gesture may be indicative of a directive for the apparatus to cause performance of a factory reset by the peripheral apparatus. In such an example embodiment, the apparatus may cause performance of the factory reset by the peripheral apparatus based, at least in part, on the determination that the other input gesture is the factory reset gesture. In at least one example embodiment, performance of the factory reset by the peripheral apparatus comprises changing of at least one peripheral apparatus setting value to at least one default peripheral apparatus setting value. For example, the peripheral apparatus may have been shipped from the manufacturer of the peripheral apparatus with default software, default peripheral apparatus setting values, and/or the like. Subsequently, a user of the peripheral apparatus, a piece of software installed on the apparatus, etc. may have caused modification to one or more of the default peripheral apparatus setting values. In such an example, a factory reset by the peripheral apparatus may restore the modified peripheral apparatus setting values to their respective default peripheral apparatus setting values.

In at least one example embodiment, the activities illustrated in the example of FIGURE 10 are performed subsequent to the activities illustrated in the example of FIGURE 8. For example, an apparatus may receive information indicative of a first input gesture performed by way of a peripheral apparatus, determine that the first input gesture is a firmware update gesture, and cause updating of the firmware of the peripheral apparatus based, at least in part, on the first input gesture being the firmware update gesture. In such an example, the apparatus may receive information indicative of a second input gesture performed by way of the peripheral apparatus, determine that the second input gesture is a factory reset gesture, and cause performance of the factory reset of the peripheral apparatus based, at least in part, on the second input gesture being the factory reset gesture. In such an example, the first input gesture and the second input gesture may be different input gestures. For example, the first input gesture may correspond with the predetermined motion depicted in FIGURE 2G, and the second input gesture may correspond with the predetermined motion depicted in FIGURE 2J.

At block 1002, the apparatus receives motion information from a peripheral apparatus. In at least one example embodiment, the motion information is indicative of an input gesture performed by way of the peripheral apparatus. The receipt, the motion information, the peripheral apparatus, and the input gesture may be similar as described regarding FIGURES 2A-2B, FIGURE 4, and FIGURES 4A-4J.

At block 1004, the apparatus determines that the input gesture is a factory reset gesture. In at least one example embodiment, the factory reset gesture is indicative of a directive for the apparatus to cause performance of a factory reset by the peripheral apparatus.

At block 1006, the apparatus causes performance of the factory reset by the peripheral apparatus based, at least in part, on the determination that the input gesture is the factory reset gesture.

Embodiments of the invention may be implemented in software, hardware, application logic or a combination of software, hardware, and application logic. The software, application logic and/or hardware may reside on the apparatus, a separate device, or a plurality of separate devices. If desired, part of the software, application logic and/or hardware may reside on the apparatus, part of the software, application logic and/or hardware may reside on a separate device, and part of the software, application logic and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. Furthermore, if desired, one or more of the above-described functions may be optional or may be combined.

The invention is defined in the appended claims.

## Claims

1. An apparatus, comprising:
at least one processor (11);
at least one memory (12) including computer program code, the memory and the computer program code configured to, working with the processor, cause the apparatus to perform at least the following:
receipt (502, 602, 802, 902) of motion information indicative of an input gesture by way of at least one motion sensor comprised by the apparatus;
determination (504, 604, 804, 904) that the input gesture is a firmware update gesture indicative of a directive to update a firmware of the apparatus, wherein the determination includes determining that a motion performed by a user and/or a motion performed by the user by way of the apparatus corresponds to a predetermined motion;
sending (506, 612, 806, 912) of a firmware download request to a separate apparatus based, at least in part, on the determination that the input gesture is the firmware update gesture;
receipt (508, 614, 808, 914) of firmware update information from the separate apparatus based, at least in part, on the firmware download request; and
update (510, 616, 810, 916) of the firmware of the apparatus based, at least in part, on the firmware update information.

2. The apparatus of Claim 1, wherein the apparatus is absent a display.

3. The apparatus of any of Claims 1-2, wherein the apparatus is absent a graphical display or is absent an alphanumeric display.

4. The apparatus of any of Claims 1-3, wherein the apparatus comprises one or more non-alphanumeric light emitting diodes.

5. The apparatus of Claim 4, wherein the memory includes computer program code configured to, working with the processor, cause the apparatus to perform actuation of a visual signal by way of the non-alphanumeric light emitting diode.

6. The apparatus of any of Claims 1-5, wherein the memory includes computer program code configured to, working with the processor, cause the apparatus to perform:
determination (606, 906) of a version of the firmware; and
determination (608, 908) that an updated version of the firmware is available for download, wherein the sending of the firmware download request to the separate apparatus is based, at least in part, on the determination that the updated version of the firmware is available for download, and the firmware update information comprises at least a portion of the updated version of the firmware.

7. The apparatus of any of Claims 1-6, wherein the memory includes computer program code configured to, working with the processor, cause the apparatus to perform:
receipt of motion information indicative of another input gesture by way of the motion sensor comprised by the apparatus;
determination that the other input gesture is another firmware update gesture, the other firmware update gesture being indicative of a directive to update a firmware of the apparatus;
determination of a version of the firmware;
determination that an updated version of the firmware is unavailable for download; and
preclusion of sending of another firmware download request to the separate apparatus based, at least in part, on the determination that the updated version of the firmware is unavailable for download.

8. The apparatus of any of Claims 1-7, wherein the memory includes computer program code configured to, working with the processor, cause the apparatus to perform:
receipt of motion information indicative of another input gesture by way of the motion sensor comprised by the apparatus;
determination that the other input gesture is a factory reset gesture, the factory reset gesture being indicative of a directive for the apparatus to perform a factory reset; and
performance of the factory reset based, at least in part, on the determination that the other input gesture is the factory reset gesture.

9. The apparatus of any of Claims 1-8, wherein the sending of the firmware download request to the separate apparatus is performed by way of at least one proximity-based communication channel, and the receipt of the firmware update information from the separate apparatus is performed by way of at least one proximity-based communication channel.

10. A method comprising:
receiving (502, 602, 802, 902) motion information indicative of an input gesture by way of at least one motion sensor comprised by the apparatus,;
determining (504, 604, 804, 904) that the input gesture is a firmware update gesture, the firmware update gesture being indicative of a directive to update a firmware of the apparatus, wherein the determination includes determining that a motion performed by a user and/or a motion performed by the user by way of the apparatus corresponds to a predetermined motion;
sending (506, 612, 806, 912) a firmware download request to a separate apparatus based, at least in part, on determining that the input gesture is the firmware update gesture;
receiving (508, 614, 808, 914) firmware update information from the separate apparatus based, at least in part, on the firmware download request; and
updating (510, 616, 810, 916) the firmware of the apparatus based, at least in part, on the firmware update information.

11. The method of Claim 10, wherein the apparatus comprises one or more non-alphanumeric light emitting diodes.

12. The method of Claim 11, further comprising performing actuation of a visual signal by way of the non-alphanumeric light emitting diode.

13. The method of any of Claims 10-12, further comprising:
determining (606, 906) a version of the firmware; and
determining (608, 908) that an updated version of the firmware is available for download, wherein sending the firmware download request to the separate apparatus is based, at least in part, on determining that the updated version of the firmware is available for download, and the firmware update information comprises at least a portion of the updated version of the firmware.

14. The method of any of Claims 10-13, further comprising:
receiving motion information indicative of another input gesture by way of the motion sensor comprised by the apparatus;
determining that the other input gesture is another firmware update gesture, the other firmware update gesture being indicative of a directive to update a firmware of the apparatus;
determining a version of the firmware;
determining that an updated version of the firmware is unavailable for download; and
precluding sending of another firmware download request to the separate apparatus based, at least in part, on determining that the updated version of the firmware is unavailable for download.

15. At least one computer-readable medium encoded with instructions that, when executed by a processor, perform the method of any of claims 10-14.

## Patentansprüche

1. Vorrichtung, die Folgendes umfasst:
mindestens einen Prozessor (11);
mindestens einen Speicher (12), der Computerprogrammcode beinhaltet, wobei der Speicher und der Computerprogrammcode dazu ausgelegt sind, durch Zusammenwirken mit dem Prozessor zu bewirken, dass die Vorrichtung mindestens Folgendes durchführt:
Empfang (502, 602, 802, 902) von Bewegungsinformationen, die eine Eingabegeste anzeigen, mittels mindestens eines Bewegungssensors, der in der Vorrichtung umfasst ist;
Bestimmung (504, 604, 804, 904), dass die Eingabegeste eine Firmwareaktualisierungsgeste ist, die eine Weisung zum Aktualisieren einer Firmware der Vorrichtung anzeigt, wobei die Bestimmung das Bestimmen beinhaltet, dass eine Bewegung, die von einem Benutzer durchgeführt wird, und/oder eine Bewegung, die vom Benutzer mittels der Vorrichtung durchgeführt wird, einer vorbestimmten Bewegung entspricht;
Senden (506, 612, 806, 912) einer Firmwaredownloadanforderung an eine separate Vorrichtung mindestens teilweise auf Basis der Bestimmung, dass die Eingabegeste die Firmwareaktualisierungsgeste ist;
Empfang (508, 614, 808, 914) von Firmwareaktualisierungsinformationen von der separaten Vorrichtung mindestens teilweise auf Basis der Firmwaredownloadanforderung; und
Aktualisierung (510, 616, 810, 916) der Firmware der Vorrichtung mindestens teilweise auf Basis der Firmwareaktualisierungsinformationen.

2. Vorrichtung nach Anspruch 1, wobei die Vorrichtung keine Anzeige aufweist.

3. Vorrichtung nach einem der Ansprüche 1-2, wobei die Vorrichtung keine grafische Anzeige aufweist oder keine alphanumerische Anzeige aufweist.

4. Vorrichtung nach einem der Ansprüche 1-3, wobei die Vorrichtung eine oder mehrere nicht alphanumerische lichtemittierende Dioden umfasst.

5. Vorrichtung nach Anspruch 4, wobei der Speicher Computerprogrammcode beinhaltet, der dazu ausgelegt ist, die Vorrichtung durch Zusammenwirken mit dem Prozessor zu veranlassen, eine Betätigung eines visuellen Signals mittels der nicht alphanumerischen lichtemittierenden Dioden durchzuführen.

6. Vorrichtung nach einem der Ansprüche 1-5, wobei der Speicher Computerprogrammcode beinhaltet, der dazu ausgelegt ist, durch Zusammenwirken mit dem Prozessor zu veranlassen, dass die Vorrichtung Folgendes durchführt:
Bestimmung (606, 906) einer Version der Firmware; und
Bestimmung (608, 908), dass eine aktualisierte Version der Firmware zum Download verfügbar ist, wobei das Senden der Firmwaredownloadanforderung an die separate Vorrichtung mindestens teilweise auf der Bestimmung basiert, dass die aktualisierte Version der Firmware zum Download verfügbar ist, und die Firmwareaktualisierungsinformationen mindestens einen Abschnitt der aktualisierten Version der Firmware umfassen.

7. Vorrichtung nach einem der Ansprüche 1-6, wobei der Speicher Computerprogrammcode beinhaltet, der dazu ausgelegt ist, durch Zusammenwirken mit dem Prozessor zu veranlassen, dass die Vorrichtung Folgendes durchführt:
Empfang von Bewegungsinformationen, die eine weitere Eingabegeste anzeigen, mittels des Bewegungssensors, der in der Vorrichtung umfasst ist;
Bestimmung, dass die weitere Eingabegeste eine weitere Firmwareaktualisierungsgeste ist, wobei die weitere Firmwareaktualisierungsgeste eine Weisung zum Aktualisieren einer Firmware der Vorrichtung anzeigt;
Bestimmung einer Version der Firmware;
Bestimmung, dass eine aktualisierte Version der Firmware nicht zum Download verfügbar ist; und
Unterlassung des Sendens einer weiteren Firmwaredownloadanforderung an die separate Vorrichtung mindestens teilweise auf Basis der Bestimmung, dass die aktualisierte Version der Firmware nicht zum Download verfügbar ist.

8. Vorrichtung nach einem der Ansprüche 1-7, wobei der Speicher Computerprogrammcode beinhaltet, der dazu ausgelegt ist, durch Zusammenwirken mit dem Prozessor zu veranlassen, dass die Vorrichtung Folgendes durchführt:
Empfang von Bewegungsinformationen, die eine weitere Eingabegeste anzeigen, mittels des Bewegungssensors, der in der Vorrichtung umfasst ist;
Bestimmung, dass die weitere Eingabegeste eine Werksrücksetzgeste ist, wobei die Werksrücksetzgeste eine Weisung zum Durchführen einer Werksrücksetzung für die Vorrichtung anzeigt; und
Durchführung der Werksrücksetzung mindestens teilweise auf Basis der Bestimmung, dass die weitere Eingabegeste die Werksrücksetzgeste ist.

9. Vorrichtung nach einem der Ansprüche 1-8, wobei das Senden der Firmwaredownloadanforderung an die separate Vorrichtung mittels mindestens eines nahbereichsbasierten Kommunikationskanals durchgeführt wird und der Empfang der Firmwareaktualisierungsinformationen von der separaten Vorrichtung mittels mindestens eines nahbereichsbasierten Kommunikationskanals durchgeführt wird.

10. Verfahren, das Folgendes umfasst:
Empfangen (502, 602, 802, 902) von Bewegungsinformationen, die eine Eingabegeste anzeigen, mittels mindestens eines Bewegungssensors, der in der Vorrichtung umfasst ist;
Bestimmen (504, 604, 804, 904), dass die Eingabegeste eine Firmwareaktualisierungsgeste ist, wobei die Firmwareaktualisierungsgeste eine Weisung zum Aktualisieren einer Firmware der Vorrichtung anzeigt, wobei die Bestimmung das Bestimmen beinhaltet, dass eine Bewegung, die von einem Benutzer durchgeführt wird, und/oder eine Bewegung, die vom Benutzer mittels der Vorrichtung durchgeführt wird, einer vorbestimmten Bewegung entspricht;
Senden (506, 612, 806, 912) einer Firmwaredownloadanforderung an eine separate Vorrichtung mindestens teilweise auf Basis des Bestimmens, dass die Eingabegeste die Firmwareaktualisierungsgeste ist;
Empfangen (508, 614, 808, 914) von Firmwareaktualisierungsinformationen von der separaten Vorrichtung mindestens teilweise auf Basis der Firmwaredownloadanforderung; und
Aktualisieren (510, 616, 810, 916) der Firmware der Vorrichtung mindestens teilweise auf Basis der Firmwareaktualisierungsinformationen.

11. Verfahren nach Anspruch 10, wobei die Vorrichtung eine oder mehrere nicht alphanumerische lichtemittierende Dioden umfasst.

12. Verfahren nach Anspruch 11, das ferner das Durchführen einer Betätigung eines visuellen Signals mittels der nicht alphanumerischen lichtemittierenden Dioden umfasst.

13. Verfahren nach einem der Ansprüche 10-12, das ferner Folgendes umfasst:
Bestimmen (606, 906) einer Version der Firmware; und
Bestimmen (608, 908), dass eine aktualisierte Version der Firmware zum Download verfügbar ist, wobei das Senden der Firmwaredownloadanforderung an die separate Vorrichtung mindestens teilweise auf dem Bestimmen basiert, dass die aktualisierte Version der Firmware zum Download verfügbar ist, und die Firmwareaktualisierungsinformationen mindestens einen Abschnitt der aktualisierten Version der Firmware umfassen.

14. Verfahren nach einem der Ansprüche 10-13, das ferner Folgendes umfasst:
Empfangen von Bewegungsinformationen, die eine weitere Eingabegeste anzeigen, mittels des Bewegungssensors, der in der Vorrichtung umfasst ist;
Bestimmen, dass die weitere Eingabegeste eine weitere Firmwareaktualisierungsgeste ist, wobei die weitere Firmwareaktualisierungsgeste eine Weisung zum Aktualisieren einer Firmware der Vorrichtung anzeigt;
Bestimmen einer Version der Firmware;
Bestimmen, dass eine aktualisierte Version der Firmware nicht zum Download verfügbar ist; und
Unterlassen des Sendens einer weiteren Firmwaredownloadanforderung an die separate Vorrichtung mindestens teilweise auf Basis des Bestimmens, dass die aktualisierte Version der Firmware nicht zum Download verfügbar ist.

15. Mindestens ein computerlesbares Medium, auf dem Anweisungen codiert sind, die, wenn sie von einem Prozessor ausgeführt werden, das Verfahren nach einem der Ansprüche 10-14 durchführen.

## Revendications

1. Appareil, comprenant :
au moins un processeur (11) ;
au moins une mémoire (12) comportant un code de programme informatique, la mémoire et le code de programme informatique étant configurés pour, en travaillant avec le processeur, amener l'appareil à réaliser au moins ce qui suit :
la réception (502, 602, 802, 902) d'informations de mouvement indicatives d'un geste d'entrée au moyen d'au moins un capteur de mouvement compris dans l'appareil ;
la détermination (504, 604, 804, 904) du fait que le geste d'entrée est un geste de mise à jour de micrologiciel indicatif d'une directive pour mettre à jour un micrologiciel de l'appareil, dans lequel la détermination comporte la détermination du fait qu'un mouvement réalisé par un utilisateur et/ou qu'un mouvement réalisé par l'utilisateur au moyen de l'appareil correspond à un mouvement prédéterminé ;
l'envoi (506, 612, 806, 912) d'une demande de téléchargement de micrologiciel à un appareil séparé en se basant au moins en partie sur la détermination du fait que le geste d'entrée est le geste de mise à jour de micrologiciel ;
la réception (508, 614, 808, 914) d'informations de mise à jour de micrologiciel à partir de l'appareil séparé en se basant au moins en partie sur la demande de téléchargement de micrologiciel ; et
la mise à jour (510, 616, 810, 916) du micrologiciel de l'appareil en se basant au moins en partie sur les informations de mise à jour de micrologiciel.

2. Appareil selon la revendication 1, dans lequel l'appareil est dépourvu d'un affichage.

3. Appareil selon l'une quelconque des revendications 1 et 2, dans lequel l'appareil est dépourvu d'un affichage graphique ou est dépourvu d'un affichage alphanumérique.

4. Appareil selon l'une quelconque des revendications 1 à 3, dans lequel l'appareil comprend une ou plusieurs diodes électroluminescentes non alphanumériques.

5. Appareil selon la revendication 4, dans lequel la mémoire comporte un code de programme informatique configuré pour, en travaillant avec le processeur, amener l'appareil à réaliser l'actionnement d'un signal visuel au moyen de la diode électroluminescente non alphanumérique.

6. Appareil selon l'une quelconque des revendications 1 à 5, dans lequel la mémoire comporte un code de programme informatique configuré pour, en travaillant avec le processeur, amener l'appareil à réaliser :
la détermination (606, 906) d'une version du micrologiciel ; et
la détermination (608, 908) du fait qu'une version mise à jour du micrologiciel est disponible pour le téléchargement, dans lequel l'envoi de la demande de téléchargement de micrologiciel à l'appareil séparé est basé au moins en partie sur la détermination du fait que la version mise à jour du micrologiciel est disponible pour le téléchargement, et les informations de mise à jour de micrologiciel comprennent au moins une partie de la version mise à jour du micrologiciel.

7. Appareil selon l'une quelconque des revendications 1 à 6, dans lequel la mémoire comporte un code de programme informatique configuré pour, en travaillant avec le processeur, amener l'appareil à réaliser :
la réception d'informations de mouvement indicatives d'un autre geste d'entrée au moyen du capteur de mouvement compris dans l'appareil ;
la détermination du fait que l'autre geste d'entrée est un autre geste de mise à jour de micrologiciel, l'autre geste de mise à jour de micrologiciel étant indicatif d'une directive pour mettre à jour un micrologiciel de l'appareil ;
la détermination d'une version du micrologiciel ;
la détermination du fait qu'une version mise à jour du micrologiciel est indisponible pour le téléchargement ; et
l'exclusion de l'envoi d'une autre demande de téléchargement de micrologiciel à l'appareil séparé en se basant au moins en partie sur la détermination du fait que la version mise à jour du micrologiciel est indisponible pour le téléchargement.

8. Appareil selon l'une quelconque des revendications 1 à 7, dans lequel la mémoire comporte un code de programme informatique configuré pour, en travaillant avec le processeur, amener l'appareil à réaliser :
la réception d'informations de mouvement indicatives d'un autre geste d'entrée au moyen du capteur de mouvement compris dans l'appareil ;
la détermination du fait que l'autre geste d'entrée est un geste de réinitialisation d'usine, le geste de réinitialisation d'usine étant indicatif d'une directive pour que l'appareil à réalise une réinitialisation d'usine ; et
la réalisation de la réinitialisation d'usine en se basant au moins en partie sur la détermination du fait que l'autre geste d'entrée est le geste de réinitialisation d'usine.

9. Appareil selon l'une quelconque des revendications 1 à 8, dans lequel l'envoi de la demande de téléchargement de micrologiciel à l'appareil séparé est réalisé au moyen d'au moins un canal de communication basé sur la proximité, et la réception des informations de mise à jour de micrologiciel à partir de l'appareil séparé est réalisée au moyen d'au moins un canal de communication basé sur la proximité.

10. Procédé comprenant :
la réception (502, 602, 802, 902) d'informations de mouvement indicatives d'un geste d'entrée au moyen d'au moins un capteur de mouvement compris dans l'appareil, ;
la détermination (504, 604, 804, 904) du fait que le geste d'entrée est un geste de mise à jour de micrologiciel, le geste de mise à jour de micrologiciel étant indicatif d'une directive pour mettre à jour un micrologiciel de l'appareil, dans lequel la détermination comporte la détermination du fait qu'un mouvement réalisé par un utilisateur et/ou qu'un mouvement réalisé par l'utilisateur au moyen de l'appareil correspond à un mouvement prédéterminé ;
l'envoi (506, 612, 806, 912) d'une demande de téléchargement de micrologiciel à un appareil séparé en se basant au moins en partie sur la détermination du fait que le geste d'entrée est le geste de mise à jour de micrologiciel ;
la réception (508, 614, 808, 914) d'informations de mise à jour de micrologiciel à partir de l'appareil séparé en se basant au moins en partie sur la demande de téléchargement de micrologiciel ; et
la mise à jour (510, 616, 810, 916) du micrologiciel de l'appareil en se basant au moins en partie sur les informations de mise à jour de micrologiciel.

11. Procédé selon la revendication 10, dans lequel l'appareil comprend une ou plusieurs diodes électroluminescentes non alphanumériques.

12. Procédé selon la revendication 11, comprenant en outre l'actionnement d'un signal visuel au moyen de la diode électroluminescente non alphanumérique.

13. Procédé selon l'une quelconque des revendications 10 à 12, comprenant en outre :
la détermination (606, 906) d'une version du micrologiciel ; et
la détermination (608, 908) du fait qu'une version mise à jour du micrologiciel est disponible pour le téléchargement, dans lequel l'envoi de la demande de téléchargement de micrologiciel à l'appareil séparé est basé au moins en partie sur la détermination du fait que la version mise à jour du micrologiciel est disponible pour le téléchargement, et les informations de mise à jour de micrologiciel comprennent au moins une partie de la version mise à jour du micrologiciel.

14. Procédé selon l'une quelconque des revendications 10 à 13, comprenant en outre :
la réception d'informations de mouvement indicatives d'un autre geste d'entrée au moyen du capteur de mouvement compris dans l'appareil ;
la détermination du fait que l'autre geste d'entrée est un autre geste de mise à jour des micrologiciel, l'autre geste de mise à jour de micrologiciel étant indicatif d'une directive pour mettre à jour un micrologiciel de l'appareil ;
la détermination d'une version du micrologiciel ;
la détermination du fait qu'une version mise à jour du micrologiciel est indisponible pour le téléchargement ; et
l'exclusion de l'envoi d'une autre demande de téléchargement de micrologiciel à l'appareil séparé en se basant au moins en partie sur la détermination du fait que la version mise à jour du micrologiciel est indisponible pour le téléchargement.

15. Au moins un support lisible par ordinateur codant des instructions qui, lorsqu'elles sont exécutées par un processeur, réalisent le procédé de l'une quelconque des revendications 10 à 14.
